# EUROPEAN PATENT SPECIFICATION

(11) **EP 3 690 272 B1**
(45) Date of publication and mention of the grant of the patent: **18.08.2021**
(21) Application number: 19154988.0
(22) Date of filing: 01.02.2019
(51) Int. Cl.: F16D 55/225

(54) **DISC BRAKE HAVING A MOUNTING DEVICE FOR MOUNTING A SIGNAL CABLE TO A SPRING HANGER**
SCHEIBENBREMSE MIT BEFESTIGUNGSVORRICHTUNG ZUR BEFESTIGUNG EINES SIGNALKABELS AN EINEN FEDERHÄNGER
FREIN A DISQUE AVEC UN DISPOSITIF DE MONTAGE POUR LE MONTAGE D'UN CABLE DE SIGNAL SUR UNE SUSPENSION À RESSORT

(43) Date of publication of application: 05.08.2020
(73) Proprietor: ZF CV Systems Europe BV, 1170 Brussels (BE)
(72) Inventor: Strzala, Wieslaw, 46-220 Byczyna (PL)
(74) Representative: Copi, Joachim

(56) References cited:
- EP-A1- 2 112 397
- DE-A1-102005 060 551
- DE-A1-102017 107 136
- DE-B3-102011 012 271

## Description

The invention relates to a mounting device for mounting a signal table to a spring hanger of a disc brake, the mounting device comprising: a basic body having fastening means for fastening the basic body to a spring hanger, a cable guide configured to be mounted along a side surface of a spring hanger, the cable guide being attached to the basic body.

Mounting devices for mounting or attaching a signal cable to a spring hanger of a disc brake are generally known. It is the aim of such devices to safely guide sensor cables that originate at sensors used to determine the condition of brake pads typically out of the body of a brake caliper. As disc brakes are often equipped with a so-called spring hanger spanning over an opening in the brake caliper that is used for introducing and exchanging brake pads, it has been found to be beneficial to guide such a signal cable in the proximity of such a spring hanger. This enables to keep the signal cable length short and also ensures that such a sensor and the cable are accessible after the disc brake has been assembled.

More specifically, DE 10 2017 107 136 discloses a mounting device for mounting a signal cable to a spring hanger of a disc brake having a holder, wherein the holder is arranged utilizing frictional engagement on one side of a lateral region of the spring hanger. The holder clamps a signal cable between the inner side of the holder and an associated side of the spring hanger.

US 2015/0041258 A1 discloses a mount for a signal cable of a device for monitoring brake pad wear. The signal cable is secured in a cable guide, which bears against a retaining bracket, which extends across a mounting opening of a brake caliper. The cable guide is covered by a cover. The cable guide and/or the cover have at least one spacer element which is arranged in an intermediate space accommodating the signal cable.

The devices known from the prior art are capable of guiding a cable along a spring hanger of disc brake. However, these devices are unsuitable at least for some disc brake types and brake operation scenarios.

For example, for applications requiring a high durability, friction-based connecting solutions have the disadvantage that especially in environments incorporating high degrees of vibration, the signal cable may come loose and separate from the spring hanger such that safe holding of the cable cannot be achieved in any circumstances. Furthermore, some known mounting devices are rather difficult to assemble, require significant space, or involve high production costs.

It was therefore an object of the invention to provide a disk brake for a mounting device for mounting a signal cable to a spring hanger that overcomes at least some of the above-mentioned issues.

In particular, it was an object of the invention to provide a disk brake for a mounting device that offers a highly durable, easy to manufacture and assemble mounting means for mounting a signal cable to a spring hanger.

According with the invention, a brake disc is proposed at which the fastening means are configured to clasp at least a portion of the spring hanger (claim 1). The invention is based on the finding that such clasping function of the fastening means offers a number of advantages. First of all, such a mounting device may be assembled to a spring hanger more easily. Spring hangers are typically designed to allow for a replacement of brake pads and other components.

DE 10 2017 107136 A1 discloses a securing device secures at least one signal cable to a pad retainer bracket of a disc brake, wherein the disc brake has a pad retainer bracket that is secured to a brake caliper of disc brake spanning a brake disc. The retainer is retained on one side in a lateral region of the pad retainer bracket.

DE 10 2011 012271 B3 discloses an anchor for conduct conductor of device for monitoring brake lining war out of disk brake. The anchor has a retaining bracket and cover, where a conductor is positioned between the retaining bracket and cover. The contact conductor is fixed to the cover that has the clamping lugs, in which the contact conductor is held in positive or friction positive manner.

EP 2 112 397 A1 shows a n binder for the brake linings of a disc brake and cable holder for same. The binder has a retaining bracket fixed at a disk brake and extending transverse to a brake pad. A cable holder fastened to the retaining bracket and a side of the retaining bracket facing the brake pad forms a cross section closed by a partial length of the retaining bracket for passing a signal or control cable.

DE 10 2005 060551 A1 shows a disc brake wear detector which has electrical connections on opposite side of the brake pad frame. The electrical connections are secured to a frame bridging the disc brake. The electrical connections are located on that side of the brake frame opposite to the brake linings.

Therefore, they are typically designed so that they are connected with other components of the brake, for example the caliper, by a hinge-like arrangement on one side and are fastened to the caliper with a fastening device on the other side.

Thus, a mounting device having fastening means that are configured to at least partially clasp a spring hanger, can be easily mounted after the spring hanger has been brought into a replacement position in which brake pads are normally replaced. Furthermore, guiding the signal cable by the help of the mounting device along a side surface of spring hanger offers the advantage of protecting the signal cable from mechanical influence, for example from the rotating disc, and on the other hand reduces the amount of installation space required. The mounting device offers compact dimensions and easily fits into the space, which a caliper offers, for example, to allow access to the brake pads.

According to the invention, it is preferred that the fastening means comprise an upper contact element being configured to clasp an upper portion of the spring hanger, and side tabs being spaced apart from each other by a distance substantially equivalent to the width of the spring hanger and being configured to clasp with side portions of the spring hanger.

The term "width" of the spring hanger is defined herein as the extent of the spring hanger perpendicular to its longitudinal axis. The upper side or upper portion of the spring hanger is defined as the surface that is accessible during operation and is substantially directed upwards when the brake has been installed at a vehicle. The lower side is defined as the side of the spring hanger, which is directed towards the brake pads and the rotor. Furthermore, longitudinal axis or direction in association with the spring hanger and the mounting device are defined as the axis and direction proceeding along the spring hanger and mounting device from hinge to fastening means.

By providing an upper contact element and side tabs, the spring hanger is clasped from at least three sides. In a preferred solution, however, the spring hanger is clasped from all four sides. Thus, the mounting device is rigidly attached to the spring hanger and securely guides the signal cable along the side surface of the same.

According to another preferred embodiment, the upper contact element bridges the entire width of the spring hanger. Preferably, the contact element bridges the entire width of the spring hanger only at a certain length section of the spring hanger.

According to the invention, the contact element comprises a first and second upper tab, the upper tabs being arranged on opposite sides along the width of the spring hanger, each upper tab spanning a width of the spring hanger of < 25 % of its total width, preferably < 40 % of its total width.

This preferred embodiment having two upper tabs instead of bridging the entire width has been found to be beneficial for certain applications to save material and also to reduce weight.

Preferably, the at least one upper tab is arranged at the at least one side tab. According to this embodiment, it is preferred that the upper tab and the side tab are directly connected to each other and form a single component. This has also been found to be beneficial in terms of material saving.

In yet another embodiment, the upper tab is arranged at one of the side tabs, the upper tab comprising locking means configured to temporarily engage with an opposite side of the spring hanger. This solution provides an easy and fast replacement capability.

It is furthermore preferred for the basic body to comprise stiffening elements for increasing the stiffness of the basic body. Especially when reducing the amount of material associated with the fastening means, it has been found to be beneficial to locally reinforce the basic body by using stiffening elements.

It is furthermore preferred that at least one of the stiffening elements comprises a through-hole for guiding the signal cable through such a through-hole. This improves the degree to which the signal cable can be secured to the mounting device.

According to another embodiment, the fastening means arranged on the basic body furthermore comprise a lower contact element being configured to clasp with a lower side of the spring hanger. The utilization of also a lower contact element allows a clasping of the spring hanger from four sides. This has been found to be beneficial to increase the rigidity and durability of such a mounting device even more.

Preferably, the lower contact element is configured to engage with a crease formed at a lower side of the spring hanger. In case the spring hanger is provided with a crease, such a technical solution inhibits the movement of the mounting device in a longitudinal direction.

According to another embodiment, the cable guide comprises cable guide fastening means having a first tab to engage with the lower side of the spring hanger. It has been found to be beneficial to not only arrange fastening means at the basic body, but also at the cable guide. This significantly increases the connection quality between the mounting device and the spring hanger and also ensures that even during vibrations and other operational conditions, the mounting device and the signal cable are guided safely and durably along the spring hanger.

According to yet another embodiment, the cable guide fastening means have a second tab configured to engage with an upper side of the spring hanger. This also achieves the same advantages as discussed above.

It is moreover preferred that the cable guide has a stop tab configured to engage with a component of a disc brake for inhibiting a movement of the fastening device. A stop tab arranged at the cable guide ensures that the mounting device is inhibited to move in any longitudinal direction of the spring hanger. It thus remains at a steady position during the operation of the brake.

According to another embodiment, the fastening means are molded integrally to the basic body and/or the cable guide. It is moreover preferred that the mounting device is made of one piece.

This ensures that the mounting device can be manufactured cost efficiently and that only one single component needs to be assembled to the spring hanger or be removed from the same.

It is moreover preferred that the cable guide has a lower rail section for providing a rest for a signal cable and for shielding heat from being transferred to the signal cable. Thus, the lower rail section has a dual function. On the one hand, it guides the signal cable and on the other hand it ensures that heat and also small particles and debris from the rotor of the brake would not negatively influence the signal cable.

It is moreover preferred that the cable guide comprises at least one clamping tab for clamping the signal cable to the cable guide. Besides allowing a lateral movement of the cable, it may be beneficial in some circumstances to ensure that the signal cable is rigidly fixed to the mounting device by clamping the cable to the cable guide.

Preferably, the clamping tab has a first section arranged at the lower rail section and a second section being connected to the first section, the second section having an angle relative to the first section of 90° to 160°, preferably 135°. Such a design of the clamping tab allows for an easy introduction of the signal cable into the tab and also an easy and durable fixation of the cable within the clamping tab.

According to yet another embodiment, the basic body comprises a second cable guide for guiding a signal cable along the width of the spring hanger. It has been found that there might arise a need to guide the signal cable not only longitudinally along the spring hanger, but also along the width of the same.

In this case, it is beneficial to attach a second cable guide at the basic body to ensure that the signal cable is guided to the location, which is beneficial for a certain kind of application.

It is preferred that the basic body and/or the cable guide are formed of one of the following: sheet metal, plastic, or fiber reinforced plastic. According to another preferred embodiment, the basic body comprises at least one side wing having a cable hook for guiding and/or fixing the signal cable. This further enhances the cable guiding capabilities of the device.

Preferably, the at least one side wing is attached to a stiffening element. This keeps the device-weight low by simultaneously providing a rigid cable guiding means.

It is moreover preferred that the at least one side wing has a top surface having an opening formed therein, and wherein the cable hook extends at least partially above the top surface. This arrangement allows for a secure and durable cable guidance and fixation. The invention relates to a pad wear warning indication system, comprising: a pad wear sensor for assessing the wear of a brake pad, a signal cable connected to the pad wear sensor, and a mounting device according to any of the embodiments described above for mounting the signal cable to the spring hanger of a disc brake.

The invention relates to a disc brake, comprising: a brake caliper, brake pads being arranged at least partially within the caliper, a rotor being arranged in between the brake pads, a spring hanger spanning an opening of the caliper, and a pad wear warning indication system according to the embodiment described above.

Both, the pad wear warning indication system, and the disc brake, take advantage of the same benefits and preferred embodiments as the mounting device according to the invention. In this regard, reference is made to the above explanations and the content is included herein.

According to another embodiment, the spring hanger has a lower side, the lower side comprising a crease.

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereinafter, which show in:
- Fig. 1:: a preferred embodiment of a disc brake according to the concept of the invention in a perspective view;
- Fig. 2:: a mounting device for mounting a signal cable to a spring hanger of a disc brake according to the preferred embodiment in a perspective view;
- Fig. 3:: a pad wear warning indication system according to the preferred embodiment in a perspective view;
- Figs. 4-9:: different perspectives of the mounting device according to the preferred embodiment;
- Figs. 10, 11:: an alternative embodiment of the mounting device according to the concept of the invention in perspective views;
- Figs. 12, 13:: further alternative embodiments of the mounting device according to the concept of the invention in perspective views, and
- Fig. 14-16:: a further alternative embodiment of the mounting device according to the concept of the invention in perspective views.

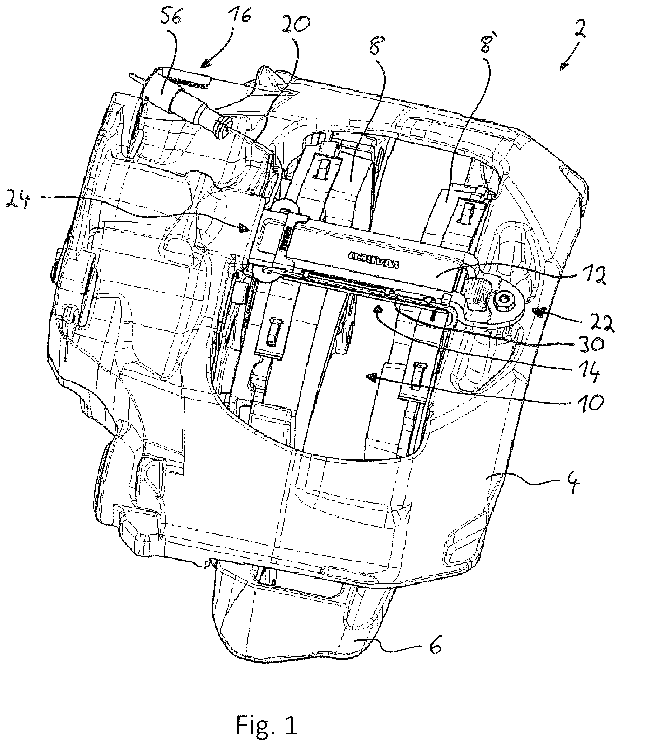

Fig. 1 shows a preferred embodiment of a disc brake 2 having a mounting device 14 according to the core of the invention. The disc brake 2 comprises a caliper 4, which is mountable to a corresponding receiving section of a vehicle. The disc brake 2 has a brake saddle 6, which is, among others, configured to receive brake pads 8, 8'.

In between the brake pads 8, 8', a rotor, which is not shown in Fig. 1, is arranged during operation. The rotor is located in a rotor accommodation space 10. The brake pads 8, 8' are held in position by a spring hanger 12. The spring hanger 12 is connected to the caliper 4 by a spring hanger seat 24 on one side and by spring hanger fixation means 22 on the other side.

After releasing the spring hanger fixation means 22 and guiding the spring hanger 12 out of its seat 24, the spring hanger 12 may be removed. When the spring hanger 12 is removed, the brake pads 8, 8' may be removed likewise and be exchanged.

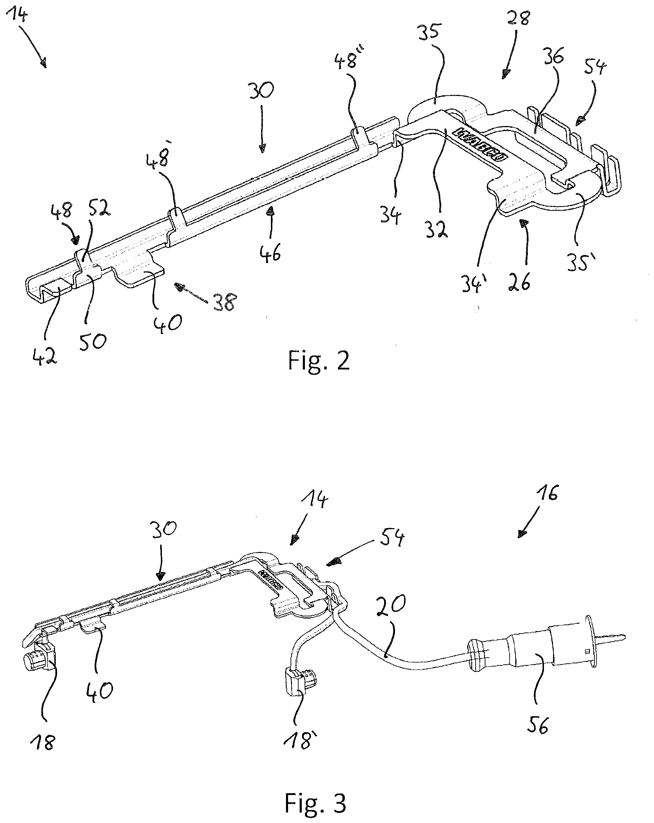

To assess the degree of wear of the brake pads 8, 8', the disc brake 2 comprises a pad wear warning indication system 16. This pad wear warning indication system 16 comprises wear sensors 18, 18' (see Fig. 3) a signal cable 20, the mounting device 14 and a connector 56. Typically, each wear sensor 18, 18' (see Fig. 3) is associated to one brake pad 8, 8'. As the wear sensors 18, 18' need to be connected to a vehicle data system, the connector 56 is located in the proximity of the region of the caliper 4, which is configured to be connectable to a vehicle. Especially for the wear sensor 18' associated with brake pad 8', there arises a need to guide the signal cable 20 from the proximity of brake pad 8' towards the connector 56.

To achieve this, according to the core of the invention, the mounting device 14 is mounted onto the spring hanger 12. The mounting device 14 comprises a cable guide 30, in which the signal cable 20 may be inserted. With the help of this, the signal cable 20 is guided along the spring hanger 12 towards the wear sensor 18, which is associated with brake pad 8 and towards the connector 56. To mount and demount the mounting device 14 to the spring hanger 12, the spring hanger fixation means 22 needs to be released and removed and the spring hanger 12 has to be hoisted and brought to an upper position.

Thereafter, the mounting device 14 may be removed by pushing the mounting device 14 in a direction away from spring hanger seat 24. To mount the mounting device 14, the mounting device 14 is guided towards and onto the spring hanger 12 while the spring hanger 12 is still in a at least partially upward position. After having shelved the mounting device onto the spring hanger 12, the spring hanger 12 can be brought into its operating position and the spring hanger fixation means 22 are utilized to keep the mounting device 14 in this position.

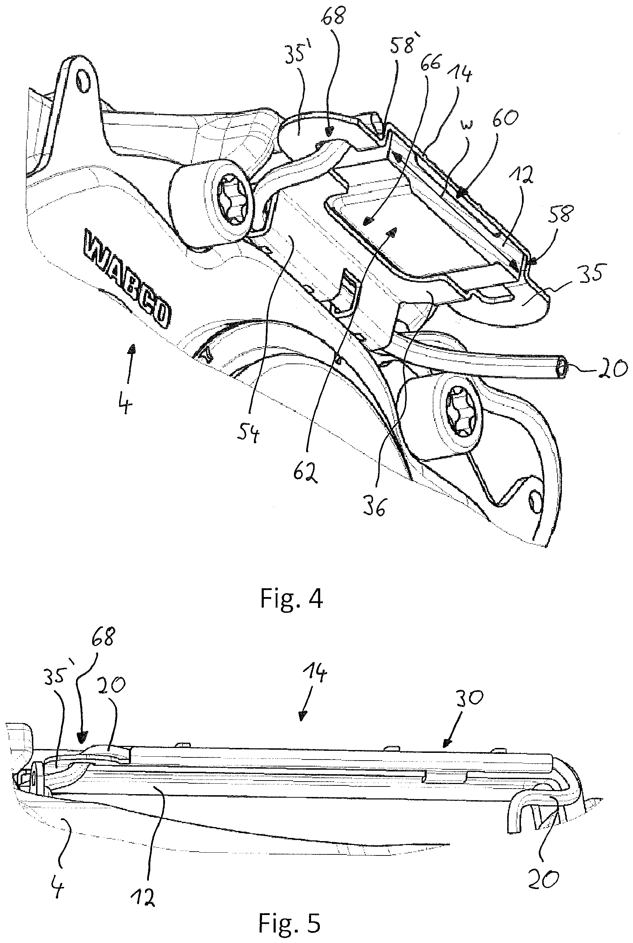

Fig. 2 shows the mounting device 14 in a more detailed view. The mounting device 14 comprises a basic body 26 and a cable guide 30, which is connected to the basic body 26. The basic body 26 comprises fastening means 28 for fastening the basic body 26 to the spring hanger 12 (not shown). Theses fastening means 28 comprise an upper contact element 32, which is configured to clasp an upper side 60 (see Fig. 4) of the spring hanger 12, side tabs 34, 34', which are spaced apart from each other by a distance substantially equivalent to a width w of the spring hanger 12 and are configured to clasp with side sections 58, 58' of the spring hanger 12, and a lower contact element 36. The upper contact element 32 spans the basic body 26. The lower contact element 36 is configured to clasp with a lower surface 62 of the spring hanger 12. The fastening means 28 ensure that the mounting device 14 is safely and durably connectable to the spring hanger 12. The basic body 26 moreover comprises stiffening element 35, 35' to increase the stiffness of the basic body 26. To guide a signal cable 20 (not shown) along the width w of the mounting device 14 and the spring hanger 12, the basic body 26 comprises a second cable guide 54.

The cable guide 30, which is integrally formed with the basic body 26, is configured to be mounted along a side surface 58 (see Fig. 4) of the spring hanger 12 and to guide a signal cable 20 along such a side surface 58. To enable this, the cable guide 30 comprises a lower rail section 46 for providing a rest for the signal cable 20 and for shielding heat from being transferred to the signal cable 20. Furthermore, the cable guide 30 comprises a number of means for guiding and fixing a signal cable 20 to the cable guide 30. In this regard, the cable guide 30 comprises clamping tabs 48, 48', 48", which may, with respect to their material properties, be somewhat flexible or bendable and may thus be utilized to clamp a signal cable 20 to the cable guide 30. The clamping tabs 48, 48', 48" comprise a first section 50 and a second section 52. The first section 50 and the second section 52 are angled towards one another by an angle of 90° to 160°, preferably 135°.

The cable guide 30 furthermore comprises cable guide fastening means 38 having a first tab 40, which is configured to engage with a lower side 62 (see Fig. 4) of the spring hanger 12. The cable guide 30 furthermore comprises a second tab 42, which is configured to engage with an upper side 60 of the spring hanger 12. This ensures that not only the basic body 26 but also the entire cable guide 30 are rigidly and durably connectable to the spring hanger 12.

Fig. 3 shows a pad wear warning indication system 16 comprising the mounting device 14 and wear sensors 18, 18' that are connected by a signal cable 20 to a connector 56. The signal cable 20 is accommodated in the mounting device 14, especially in the cable guide 30 and the second cable guide 54.

Fig. 4 shows a sectional view of parts of the caliper 4, and the mounting device 14 being mounted onto the spring hanger 12. As illustrated in Fig. 4, the mounting device 14 has a second cable guide 54, which guides the cable 20 along the width *w* of the spring hanger 12. The mounting device 14 moreover has stiffening elements 35, 35' to increase the stiffness of the same.

Moreover, the stiffening elements 35, 35' form, in conjunction with the spring hanger 12, a through-hole 68 through which the signal cable 20 may be guided. The spring hanger 12 has side sections 58, 58', an upper side 60 and a lower side 62, as well as a lower contact element 36. Furthermore, a crease 66 is arranged at the lower side 62 of the spring hanger 12.

Fig. 5 shows an alternative view of the caliper 4, the spring hanger 12 and the mounting device 14. It can be seen that the cable guide 30 of the mounting device 14 guides the signal cable 20 along a longitudinal axis of the spring hanger 12 spanning an opening of the caliper 4.

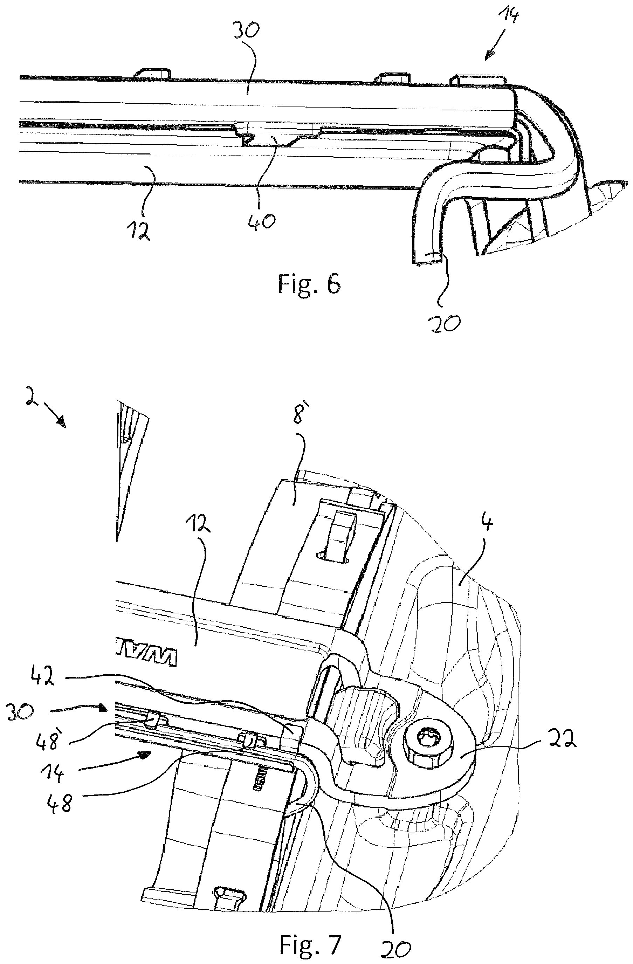

Fig. 6 shows the same embodiment as Figs. 1-5. It can be obtained from Fig. 6 how the first tab 40 of the cable guide 30 interacts with spring hanger 12 to ensure that the cable guide 30 is durably and rigidly connectable to the spring hanger 12.

Fig. 7 shows a detailed perspective view of the area around the brake pad 8'. It can be seen that the signal cable 20 originates from a wear sensor 18' (not shown) and is guided via the cable guide 30 to the left side in the perspective of Fig. 7 towards the other brake pad 8 (not shown). The signal cable 20 is clamped within the cable guide 30 with the help of clamping tabs 48, 48'.

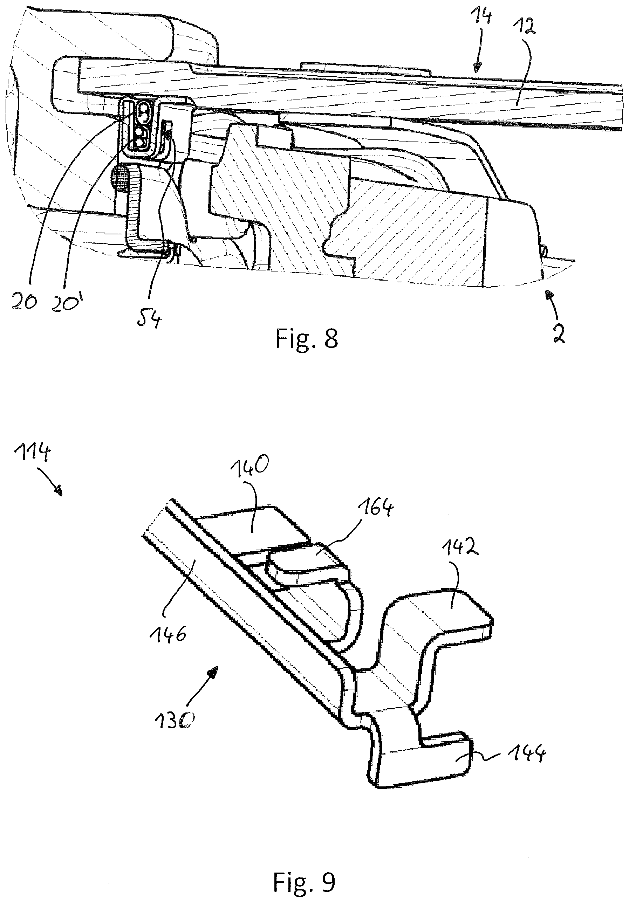

Fig. 8 shows another perspective view of the embodiment according to Figs. 1 to 7, while in Fig. 8 the arrangement of the signal cable 20 within the second cable guide 54 is illustrated.

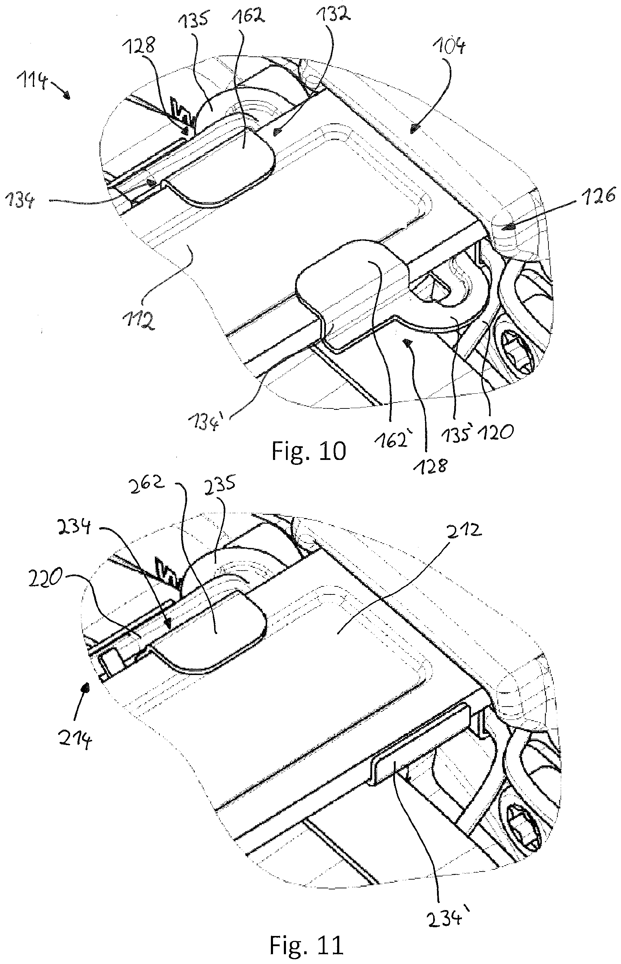

An alternative embodiment of a mounting device 114 is shown in Figs. 9 and 10. Fig. 9 shows a detailed view of a section of a cable guide 130. The cable guide 130 comprises a lower rail section 146, and a first tab 140 configured to engage with a lower side of the spring hanger 112 and a second tab 142 configured to engage with an upper side of the spring hanger 112. The cable guide 130 comprises a clamping tab 164 to guide a signal cable 120. Furthermore, the cable guide 130 comprises a stop tab 144, which is configured to engage with a component of the spring hanger 112 to ensure that the position of the mounting device 140 is fixed in a longitudinal direction on the spring hanger 112.

Fig. 10 shows a basic body 126 of the mounting device 114. The basic body 126 comprises fastening means 128 having upper contact elements 132, which comprises upper tabs 162, 162'. These upper tabs 162, 162' only span a certain area of the spring hanger 112. The mounting device 114 moreover comprises stiffening elements 135, 135' and side tabs 134, 134'. The upper tabs 162, 162' are arranged at the side tabs 134, 134'.

Another alternative embodiment of a mounting device 214 for at least partially clasping a spring hanger 212 is illustrated in Fig.11. The mounting device 214 intended to guide a signal cable 220 comprises a combination of a side tab 234' and a combined side tab 234/ upper tab 262. The mounting device 214 furthermore comprises a stiffening element 235 which is arranged only on one side of the mounting device 214.

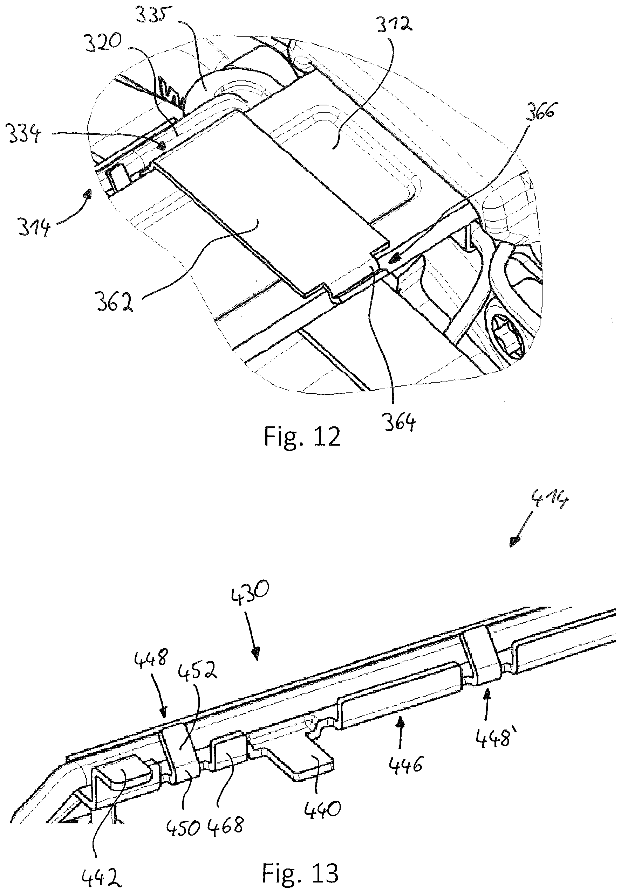

Yet another alternative embodiment is shown in Fig. 12. The mounting device 314 for guiding a signal cable 320 of this embodiment comprises an upper tab 362 spanning the whole width w of the spring hanger 312. The upper tab 362 is connected to a side tab 334. The upper tab 362 is configured to engage with an crease 366 of the spring hanger 312. The mounting device 314 also comprises a stiffening element 335, which is arranged on only one side of the mounting device 314.

Fig. 13 shows an alternative embodiment of a cable guide 430. The cable guide 430 comprises a lower rail section 446, and a first tab 440 being configured to engage with a lower side of the spring hanger (not shown) and second tab 442 being configured to engage with an upper side of the spring hanger (not shown). The cable guide 430 furthermore comprises clamping tabs 448, 448', while each clamping tab 448, 448' has a first section 450 and a second section 452. The cable guide 430 moreover comprises an upward tab 468. The upward tab 468 is utilized for guiding a signal cable 420. The cable guide 430 additionally comprises clamping tabs 448, 448' to clamp the signal cable 420 to the cable guide 430.

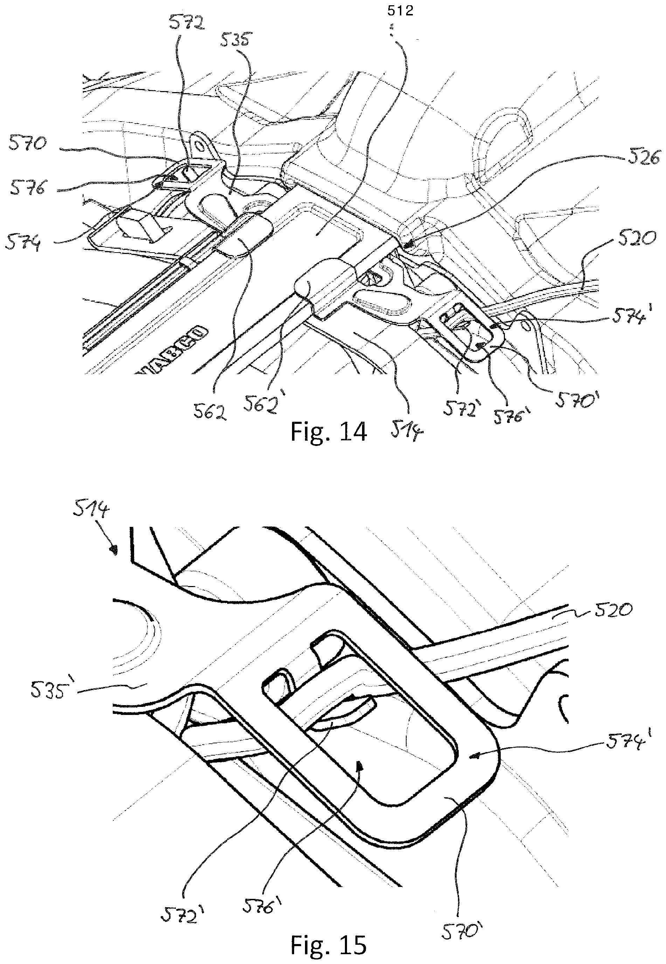

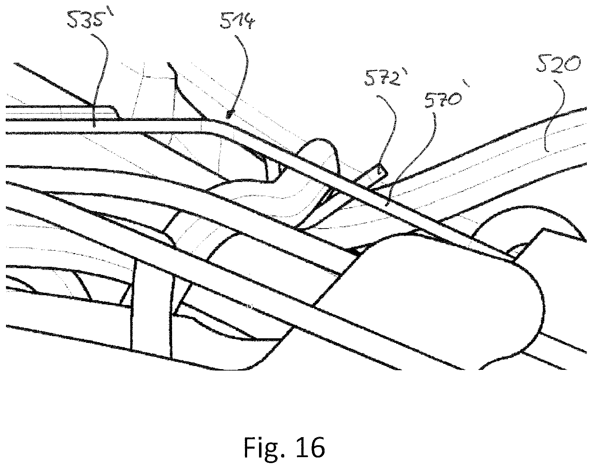

A further embodiment of a mounting device 514 is shown in Figs. 14-16. The mounting device 514 is arranged to clasp at least a portion of the spring hanger 512 comprises a basic body 526 and upper tabs 562, 562'. On the basic body 526 stiffening elements 535, 535' are disposed.

In this embodiment, side wings 570, 570' are attached to the stiffening elements 535, 535', the side wings 570, 570' having openings 576, 576' formed therein. Furthermore, cable hooks 572, 572' are arranged on the side wings 570, 570' in a way such that the cable hooks 572, 572' extend above the respective top surface 574, 574' of side wing 570, 570' trough the openings 576, 576'. This enables the cable hooks 572, 572' to securely fix a signal cable 520.

### List of reference signs

- 2: disc brake
- 4: caliper
- 6: brake saddle
- 8, 8': brake pads
- 10: rotor accommodation space
- 12: spring hanger
- 14: mounting device
- 16: pad wear warning indication system
- 18, 18': wear sensor
- 20: signal cable
- 22: spring hanger fixation means
- 24: spring hanger seat
- 26: basic body
- 28: fastening means
- 30: cable guide
- 32: upper contact element
- 34, 34': side tabs
- 35, 35': stiffening elements
- 36: lower contact element
- 38: cable guide fastening means
- 40: first tab
- 42: second tab
- 46: lower rail section
- 48, 48', 48": clamping tab
- 50: first section of clamping tab
- 52: second section of clamping tab
- 54: second cable guide
- 56: connector
- w: width of spring hanger
- 58, 58': side surface/sections of spring hanger
- 60: upper side of spring hanger
- 62: lower side of spring hanger
- 66: crease
- 68: trough hole
- 104: caliper
- 112: spring hanger
- 114: mounting device
- 120: signal cable
- 126: basic body
- 128: fastening means
- 130: cable guide
- 132: upper contact element
- 134, 134': side tabs
- 135, 135': stiffening elements

- 140: first tab
- 142: second tab
- 144: stop tab
- 146: lower rail section
- 162, 162': upper tab
- 164: clamping tab
- 212: spring hanger
- 214: mounting device
- 220: signal cable
- 234, 234': side tabs
- 235: stiffening element
- 262: upper tab
- 312: spring hanger
- 314: mounting device
- 320: signal cable
- 334: side tab
- 335: stiffening element
- 362: upper tab
- 364: locking means
- 366: crease
- 414: mounting device
- 420: signal cable
- 430: cable guide
- 440: first tab
- 442: second tab
- 446: lower rail section
- 448, 448': clamping tab
- 450: first section of clamping tab
- 452: second section of clamping tab
- 468: upward tab
- 512: spring hanger
- 514: mounting device
- 520: signal cable
- 526: basic body
- 535, 535': stiffening element
- 562,562': upper tab
- 570, 570': side wing
- 572, 572': cable hook
- 574, 574': top surface of side wing
- 576, 576': openings

## Claims

1. A disc brake (2), comprising: - a brake caliper (4, 104), - brake pads (8, 8') being arranged at least partially within the caliper (4, 104), - a rotor being arranged in between the brake pads (8, 8') within an accommodation space (10), - a spring hanger (12, 112, 212, 312, 512) spanning an opening of the caliper (4), and - a pad wear warning indication system (16) comprising: - a pad wear sensor (18, 18') for assessing the wear of a brake pad (8, 8'), - a signal cable (20) connected to the pad wear sensor (18, 18'), and -a mounting device (14, 114, 214, 314, 414, 514) for mounting a signal cable (20, 120, 220, 320, 420, 520) to a spring hanger (12, 112, 212, 312, 512) of a disc brake (2), the mounting device (14, 114, 214, 314, 414, 514) comprising: - a basic body (26, 126, 526) having fastening means (28, 128) for fastening the basic body (26, 126, 526) to a spring hanger (12, 112, 212, 312, 512), - a cable guide (30, 130, 430) configured to be mounted along a side surface of the spring hanger (12, 112, 212, 312, 512), the cable guide (30, 130, 430) being attached to the basic body (26, 126, 526), whereby the fastening means (28, 128) are configured to clasp at least a portion of the spring hanger (12, 112, 212, 312, 512), whereby the fastening means (28, 128) comprise: - an upper contact element (32, 132) being configured to clasp an upper side (60) of the spring hanger (12, 112), and - side tabs (34, 34', 134, 134') being spaced apart from each other by a distance substantially equivalent to the width (w) of the spring hanger (12, 112) and being configured to clasp with side sections (58, 58') of the spring hanger (12, 112) **characterized in that** the upper contact element (132) of the mounting device (114) comprises a first and a second upper tab (162, 162'), the upper tabs (162, 162') being arranged on opposite sides along the width (w) of the spring hanger (112), each upper tab (162, 162') spanning a width of the spring hanger (112) of < 25 % of its total width (w), preferably < 40 % of its total width (w).

2. The disc brake (2) according to claim 1, wherein the upper contact element (32, 132) of the mounting device (14, 114) bridges the entire width (w) of the spring hanger (12, 112).

3. The disc brake (2) according to claims 1 or 2, wherein the at least one upper tab (262) of the mounting device (214) is arranged at the at least one side tab (234).

4. The disc brake (2) according to claims 1 or 3, wherein the upper tab (362) of the mounting device (314) is arranged at one of the side tabs (334), the upper tab (362) comprising locking means (364) configured to temporarily engage with a crease (366) arranged on the spring hanger (312).

5. The disc brake (2) according to any of the preceding claims, wherein the basic body (26, 126, 526) of the mounting device (14, 114, 214, 314, 514) comprises stiffening elements (35, 35', 135, 135', 235, 335, 535, 535') for increasing the stiffness of the basic body (26, 126, 526).

6. The disc brake (2) according to any of the preceding claims, wherein the fastening means (28) of the mounting device (14) arranged on the basic body (26) furthermore comprise a lower contact element (36) being configured to clasp with a lower side (62) of the spring hanger (12).

7. The disc brake (2) according to claim 6, wherein the lower contact element (36) of the mounting device (14) is configured to engage with a crease (66) formed at a lower side (62) of the spring hanger (12).

8. The disc brake (2) according to any of the preceding claims, wherein the cable guide (30) of the mounting device (14) comprises cable guide fastening means (38) having a first tab (40) configured to engage with a lower side (62) of the spring hanger (12).

9. The disc brake (2) according to claim 8, wherein the cable guide fastening means (38) of the mounting device (14) have a second tab (42) configured to engage with an upper side (60) of the spring hanger (12).

10. The disc brake (2) according to any of the preceding claims, wherein the cable guide (130) of the mounting device (114) has a stop tab (144) configured to engage with a component of a disc brake (2) for inhibiting a movement of the mounting device (114).

11. The disc brake (2) according to any of the preceding claims, wherein the fastening means (28, 128) of the mounting device (14, 114) are molded integrally to the basic body (26, 126) and/or the cable guide (30, 130).

12. The disc brake (2) according to any of the preceding claims, wherein the cable guide (30, 130, 430) of the mounting device (14, 114, 414) has a lower rail section (46, 146, 446) for providing a rest for a signal cable (20, 120) and for shielding heat from being transferred to the signal cable (20, 120).

13. The disc brake (2) according to any of the preceding claims, wherein the cable guide (30, 430) of the mounting device (14, 114) comprises at least one clamping tab (48, 48', 48", 448, 448') for clamping the signal cable (20) to the cable guide (30, 430).

14. The disc brake (2) according to claim 13, wherein the clamping tab (48, 48', 48", 448, 448') of the mounting device (14, 114) has a first section (50, 450) arranged at the lower rail section (46, 446), and a second section (52, 452) being connected to the first section (50, 450), the second section (52, 452) having an angle relative to the first section of 90° to 160°, preferably 135°.

15. The disc brake (2) according to any of the preceding claims, wherein the basic body (26) of the mounting device (14) comprises a second cable guide (54) for guiding a signal cable (20) along the width (w) of the spring hanger (12).

16. The disc brake (2) according to any of the preceding claims, wherein the basic body (26, 126, 526) and/or the cable guide (30, 130, 430) of the mounting device (14, 114, 214, 314, 414, 514) are formed of one of the following: - sheet metal, - plastic, or - fiber reinforced plastic.

17. The disc brake (2) according to any of the preceding claims, wherein the basic body (526) of the mounting device (514) comprises at least one side wing (570, 570') having a cable hook (572, 572') for guiding and/or fixing the signal cable (520).

18. The disc brake (2) according to claim 17, wherein the at least one side wing (570, 570') of the mounting device (14) is attached to a stiffening element (535, 535').

19. The disc brake (2) according to claim 17 or 18, wherein the at least one side wing (570, 570') of the mounting device (14) has a top surface having an opening (576, 576') formed therein, and wherein the cable hook (572, 572') extends at least partially above the top surface (574, 574').

20. The disc brake (2) according to any one of preceding claims, wherein the spring hanger (12) has a lower side (62), the lower side (62) comprising a crease (66).

## Patentansprüche

1. Eine Scheibenbremse (2) umfassend:
- einem Bremssattel (4, 104),
- Bremsbelägen (8, 8'), die mindestens teilweise im Bremssattel (4, 104) angeordnet sind,
- einem Rotor, der zwischen den Bremsbelägen (8, 8') in einem Aufnahmeraum (10) angeordnet ist,
- einem Federhänger (12, 112, 212, 312, 512), der eine Öffnung des Sattels (4) überspannt, und
- einem System zur Verschleißwarnanzeige für Bremsbeläge (16) mit:
- einem Bremsbelag-Verschleißsensor (18, 18') zur Bewertung von Verschleiß für einen Bremsbelag (8, 8'),
- einem Signalkabel (20), das mit dem Bremsbelag-Verschleißsensor (18, 18') verbunden ist, und
- einer Montagevorrichtung (14, 114, 214, 314, 414, 514) zur Montage eines Signalkabels (20, 120, 220, 320, 420, 520) an einen Federhänger (12, 112, 212, 312, 512) einer Scheibenbremse (2),
wobei die Montagevorrichtung (14, 114, 214, 314, 414, 514) umfasst:
- einen Grundkörper (26, 126, 526) mit Befestigungsmitteln (28, 128) zum Befestigen des Grundkörpers (26, 126, 526) an einen Federhänger (12, 112, 212, 312, 512),
- eine Kabelführung (30, 130, 430), die so konfiguriert ist, dass sie entlang einer Seitenfläche des Federhängers (12, 112, 212, 312, 512) montiert wird, wobei die Kabelführung (30, 130, 430) am Grundkörper (26, 126, 526) angebracht ist,
wodurch die Befestigungsmittel (28, 128) so konfiguriert sind, dass sie mindestens einen Abschnitt des Federhängers (12, 112, 212, 312, 512) umklammern,
wodurch die Befestigungsmittel (28, 128) umfassen:
- ein oberes Kontaktelement (32, 132), das so konfiguriert ist, dass es eine Oberseite (60) des Federhängers (12, 112) umklammert, und
- Seitenlaschen (34, 34', 134, 134'), die in einem Abstand voneinander angeordnet sind, der im Wesentlichen der Breite (w) des Federhängers (12, 112) entspricht, und so konfiguriert sind, dass das Umklammern mit den Seitenabschnitten (58, 58') des Federhängers (12, 112) erfolgt,
**dadurch gekennzeichnet, dass** das obere Kontaktelement (132) der Montagevorrichtung (114) eine erste und eine zweite obere Lasche (162, 162') umfasst, wobei die oberen Laschen (162, 162') auf gegenüberliegenden Seiten entlang der Breite (w) des Federhängers (112) angeordnet sind, wobei jede obere Lasche (162, 162') eine Breite des Federhängers (112) über < 25% der Gesamtbreite (w), bevorzugt < 40% der Gesamtbreite (w), überspannt.

2. Die Scheibenbremse (2) nach Anspruch 1, wobei das obere Kontaktelement (32, 132) der Montagevorrichtung (14, 114) die gesamte Breite (w) des Federhängers (12, 112) überbrückt.

3. Die Scheibenbremse (2) nach Anspruch 1 oder 2, wobei die mindestens eine obere Lasche (262) der Montagevorrichtung (214) an der mindestens einen Seitenlasche (234) angeordnet ist.

4. Die Scheibenbremse (2) nach Anspruch 1 oder 3, wobei die obere Lasche (362) der Montagevorrichtung (314) an einer der Seitenlaschen (334) angeordnet ist, wobei die obere Lasche (362) Verriegelungsmittel (364) aufweist, die so konfiguriert sind, dass sie mit einem Falz (366) am Federhänger (312) vorübergehend einrasten.

5. Die Scheibenbremse (2) nach einem der vorstehenden Ansprüche, wobei der Grundkörper (26, 126, 526) der Montagevorrichtung (14, 114, 214, 314, 514) Versteifungselemente (35, 35', 135, 135', 235, 335, 535, 535') zur Erhöhung der Steifigkeit des Grundkörpers (26, 126, 526) aufweist.

6. Die Scheibenbremse (2) nach einem der vorstehenden Ansprüche, wobei die Befestigungsmittel (28) der Montagevorrichtung (14), die am Grundkörper (26) angeordnet sind, weiter ein unteres Kontaktelement (36) umfassen, das so konfiguriert ist, dass das Umklammern mit einer Unterseite (62) des Federhängers (12) erfolgt.

7. Die Scheibenbremse (2) nach Anspruch 6, wobei das untere Kontaktelement (36) der Montagevorrichtung (14) so konfiguriert ist, dass es mit einem Falz (66) an einer Unterseite (62) des Federhängers (12) einrastet.

8. Die Scheibenbremse (2) nach einem der vorstehenden Ansprüche, wobei die Kabelführung (30) der Montagevorrichtung (14) Befestigungsmittel der Kabelführung (38) umfasst, die eine erste Lasche (40) aufweisen, so konfiguriert ist, dass sie mit einer Unterseite (62) des Federhängers (12) einrastet.

9. Die Scheibenbremse (2) nach Anspruch 8, wobei die Befestigungsmittel der Kabelführung (38) der Montagevorrichtung (14) eine zweite Lasche (42) aufweisen, so konfiguriert ist, dass sie mit einer Oberseite (60) des Federhängers (12) einrastet.

10. Die Scheibenbremse (2) nach einem der vorstehenden Ansprüche, wobei die Kabelführung (130) der Montagevorrichtung (114) eine Anschlagslasche (144) aufweist, die so konfiguriert ist, dass sie mit einer Komponente einer Scheibenbremse (2) zur Verhinderung einer Bewegung der Montagevorrichtung (114) einrastet.

11. Die Scheibenbremse (2) nach einem der vorstehenden Ansprüche, wobei die Befestigungsmittel (28, 128) der Montagevorrichtung (14, 114) mit dem Grundkörper (26, 126) und/oder der Kabelführung (30, 130) einstückig geformt sind.

12. Die Scheibenbremse (2) nach einem der vorstehenden Ansprüche, wobei die Kabelführung (30, 130, 430) der Montagevorrichtung (14, 114, 414) einen unteren Schienenabschnitt (46, 146, 446) zum Bereitstellen einer Ablage für ein Signalkabel (20, 120) und zum Abschirmen der Hitze gegen eine Übertragung an das Signalkabel (20, 120) aufweist.

13. Die Scheibenbremse (2) nach einem der vorstehenden Ansprüche, wobei die Kabelführung (30, 430) der Montagevorrichtung (14, 114) mindestens eine Klemmlasche (48, 48', 48", 448, 448') zum Klemmen des Signalkabels (20) an die Kabelführung (30, 430) aufweist.

14. Die Scheibenbremse (2) nach Anspruch 13, wobei die Klemmlasche (48, 48', 48", 448, 448') der Montagevorrichtung (14, 114) einen ersten Abschnitt (50, 450) aufweist, der am unteren Schienenabschnitt (46, 446) angeordnet ist, und einen zweiten Abschnitt (52, 452) umfasst, der mit dem ersten Abschnitt (50, 450) verbunden ist, wobei der zweite Abschnitt (52, 452) einen Winkel von 90° bis 160°, vorzugsweise 135°, zum ersten Abschnitt bildet.

15. Die Scheibenbremse (2) nach einem der vorstehenden Ansprüche, wobei der Grundkörper (26) der Montagevorrichtung (14) eine zweite Kabelführung (54) zum Führen eines Signalkabels (20) entlang der Breite (w) des Federhängers (12) aufweist.

16. Die Scheibenbremse (2) nach einem der vorstehenden Ansprüche, wobei der Grundkörper (26, 126, 526) und/oder die Kabelführung (30, 130, 430) der Montagevorrichtung (14, 114, 214, 314, 414, 514) aus einem der folgenden Materialien gefertigt sind:
- Blech,
- Kunststoff, oder
- faserverstärkter Kunststoff.

17. Die Scheibenbremse (2) nach einem der vorstehenden Ansprüche, wobei der Grundkörper (526) der Montagevorrichtung (514) mindestens einen Seitenflügel (570, 570') mit einem Kabelhaken (572, 572') zum Führen und/oder Befestigen des Signalkabels (520) aufweist.

18. Die Scheibenbremse (2) nach Anspruch 17, wobei der mindestens einen Seitenflügel (570, 570') der Montagevorrichtung (14) an einem Versteifungselement (535, 535') befestigt ist.

19. Die Scheibenbremse (2) nach Anspruch 17 oder 18, wobei mindestens ein Seitenflügel (570, 570') der Montagevorrichtung (14) eine obere Fläche mit einer darin geformten Öffnung (576, 576') aufweist und wobei der Kabelhaken (572, 572') mindestens teilweise über die obere Fläche (574, 574') erweitert wird.

20. Die Scheibenbremse (2) nach einem der vorstehenden Ansprüche, wobei der Federhänger (12) eine Unterseite (62) aufweist, wobei die Unterseite (62) einen Falz (66) umfasst.

## Revendications

1. Frein à disque (2) comprenant :
- un étrier de frein (4, 104),
- des plaquettes de frein (8, 8') étant agencées au moins partiellement à l'intérieur de l'étrier (4, 104),
- un rotor étant agencé entre les plaquettes de frein (8, 8') dans un espace de logement (10),
- une suspension à ressort (12, 112, 212, 312, 512) couvrant une ouverture de l'étrier (4), et
- un système d'indication d'alerte d'usure de plaquette (16) comprenant :
- un capteur d'usure de plaquette (18, 18') pour évaluer l'usure d'une plaquette de frein (8, 8'),
- un câble de signal (20) raccordé au capteur d'usure de plaquette (18, 18'), et
- un dispositif de montage (14, 114, 214, 314, 414, 514) pour monter un câble de signal (20, 120, 220, 320, 420, 520) sur une suspension à ressort (12, 112, 212, 312, 512) d'un frein à disque (2),
le dispositif de montage (14, 114, 214, 314, 414, 514) comprenant :
- un corps de base (26, 126, 526) ayant un moyen de fixation (28, 128) pour fixer le corps de base (26, 126, 526) sur une suspension à ressort (12, 112, 212, 312, 512),
- un guide de câble (30, 130, 430) configuré pour être monté le long d'une surface latérale de la suspension à ressort (12, 112, 212, 312, 512), le guide de câble (30, 130, 430) étant fixé au corps de base (26, 126, 526),
moyennant quoi les moyens de fixation (28, 128) sont configurés pour serrer au moins une partie de la suspension à ressort (12, 112, 212, 312, 512),
moyennant quoi les moyens de fixation (28, 128) comprennent :
- un élément de contact supérieur (32, 132) qui est configuré pour serrer un côté supérieur (60) de la suspension à ressort (12, 112), et
- des languettes latérales (34, 34', 134, 134') qui sont espacées l'une de l'autre selon une distance sensiblement équivalente à la largeur (w) de la suspension à ressort (12, 112) et étant configurées pour se fermer avec des sections latérales (58, 58') de la suspension à ressort (12, 112),
**caractérisé en ce que** l'élément de contact supérieur (132) du dispositif de montage (114) comprend une première et une seconde languette supérieure (162, 162'), les languettes supérieures (162, 162') étant agencées sur les côtés opposés le long de la largeur (w) de la suspension à ressort (112), chaque languette supérieure (162, 162') couvrant une largeur de la suspension à ressort (112) de < 25% de sa largeur totale (w), de préférence < 40 % de sa largeur totale (w).

2. Frein à disque (2) selon la revendication 1, dans lequel l'élément de contact supérieur (32, 132) du dispositif de montage (14, 114) enjambe toute la largeur (w) de la suspension à ressort (12, 112).

3. Frein à disque (2) selon les revendications 1 ou 2, dans lequel la au moins une languette supérieure (262) du dispositif de montage (214) est agencée au niveau de la au moins une languette latérale (234).

4. Frein à disque (2) selon les revendications 1 ou 3, dans lequel la languette supérieure (362) du dispositif de montage (314) est agencée au niveau de l'une des languettes latérales (334), la languette supérieure (362) comprenant des moyens de verrouillage (364) configurés pour se mettre en prise temporairement avec un pli (366) agencé sur la suspension à ressort (312).

5. Frein à disque (2) selon l'une quelconque des revendications précédentes, dans lequel le corps de base (26, 126, 526) du dispositif de montage (14, 114, 214, 314, 514) comprend des éléments de raidissement (35, 35', 135, 135', 235, 335, 535, 535') pour augmenter la rigidité du corps de base (26, 126, 526).

6. Frein à disque (2) selon l'une quelconque des revendications précédentes, dans lequel les moyens de fixation (28) du dispositif de montage (14) agencés sur le corps de base (26) comprennent en outre un élément de contact inférieur (36) qui est configuré pour se fermer avec un côté inférieur (62) de la suspension à ressort (12).

7. Frein à disque (2) selon la revendication 6, dans lequel l'élément de contact inférieur (36) du dispositif de montage (14) est configuré pour se mettre en prise avec un pli (66) formé au niveau d'un côté inférieur (62) de la suspension à ressort (12).

8. Frein à disque (2) selon l'une quelconque des revendications précédentes, dans lequel le guide de câble (30) du dispositif de montage (14) comprend des moyens de fixation de guide de câble (38) ayant une première languette (40) configurée pour se mettre en prise avec un côté inférieur (62) de la suspension à ressort (12).

9. Frein à disque (2) selon la revendication 8, dans lequel les moyens de fixation de guide de câble (38) du dispositif de montage (14) ont une seconde languette (42) configurée pour se mettre en prise avec un côté supérieur (60) de la suspension à ressort (12).

10. Frein à disque (2) selon l'une quelconque des revendications précédentes, dans lequel le guide de câble (130) du dispositif de montage (114) a une languette de butée (144) configurée pour se mettre en prise avec un composant d'un frein à disque (2) pour empêcher un mouvement du dispositif de montage (114).

11. Frein à disque (2) selon l'une quelconque des revendications précédentes, dans lequel les moyens de fixation (28, 128) du dispositif de montage (14, 114) sont moulés de manière solidaire au corps de base (26, 126) et/ou au guide de câble (30, 130).

12. Frein à disque (2) selon l'une quelconque des revendications précédentes, dans lequel le guide de câble (30, 130, 430) du dispositif de montage (14, 114, 414) a une section de rail inférieure (46, 146, 446) pour fournir un appui pour un câble de signal (20, 120) et pour empêcher la chaleur d'être transférée au câble de signal (20, 120).

13. Frein à disque (2) selon l'une quelconque des revendications précédentes, dans lequel le guide de câble (30, 430) du dispositif de montage (14, 114) comprend au moins une languette de serrage (48, 48', 48", 448, 448') pour serrer le câble de signal (20) sur le guide de câble (30, 430).

14. Frein à disque (2) selon la revendication 13, dans lequel la languette de serrage (48, 48', 48", 448, 448') du dispositif de montage (14, 114) a une première section (50, 450) agencée au niveau de la section de rail inférieure (46, 446) et une seconde section (52, 452) étant raccordée à la première section (50, 450), la seconde section (52, 452) ayant un angle par rapport à la première section de 90° à 160°, de préférence de 135°.

15. Frein à disque (2) selon l'une quelconque des revendications précédentes, dans lequel le corps de base (26) du dispositif de montage (14) comprend un second guide de câble (54) pour guider un câble de signal (20) le long de la largeur (w) de la suspension à ressort (12).

16. Frein à disque (2) selon l'une quelconque des revendications précédentes, dans lequel le corps de base (26, 126, 526) et/ou le guide de câble (30, 130, 430) du dispositif de montage (14, 114, 214, 314, 414, 514) sont formés avec l'un des éléments suivants : un métal en feuille, du plastique ou du plastique renforcé en fibres.

17. Frein à disque (2) selon l'une quelconque des revendications précédentes, dans lequel le corps de base (526) du dispositif de montage (514) comprend au moins une aile latérale (570, 570') ayant un crochet de câble (572, 572') pour guider et/ou fixer le câble de signal (520).

18. Frein à disque (2) selon la revendication 17, dans lequel la au moins une aile latérale (570, 570') du dispositif de montage (14) est fixée à un élément de raidissement (535, 535').

19. Frein à disque (2) selon la revendication 17 ou 18, dans lequel la au moins une aile latérale (570, 570') du dispositif de montage (14) a une surface supérieure ayant une ouverture (576, 576') formée à l'intérieur de cette dernière, et dans lequel le crochet de câble (572, 572') s'étend au moins partiellement au-dessus de la surface supérieure (574, 574').

20. Frein à disque (2) selon l'une quelconque des revendications précédentes, dans lequel la suspension à ressort (12) a un côté inférieur (62), le côté inférieur (62) comprenant un pli (66).
